# EUROPÄISCHE PATENTANMELDUNG

(11) **EP 0 930 037 A2**
(43) Veröffentlichungstag der Anmeldung: **21.07.1999**
(21) Anmeldenummer: 99100728.7
(22) Anmeldetag: 15.01.1999
(51) Int. Cl.: A47J 41/00

(54) **Kanne**

(30) Priorität: 16.01.1998 DE 29800717 U
(71) Anmelder: EMSA-Werke Wulf GmbH & Co., 48282 Emsdetten (DE)
(72) Erfinder: Horstmann, Klaus, 48485 Neuenkirchen (DE)
(74) Vertreter: Grünecker, Kinkeldey, Stockmair & Schwanhäusser Anwaltssozietät

(57) **Zusammenfassung**

Eine Kanne, insbesondere eine Thermokanne weist einen eine obere Aufnahmeöffnung (2) aufweisenden Innenraum (3) auf. Mit dieser Aufnahmeöffnung ist ein Ausgießer (5) über einen Leitkanal (4) verbunden. Auf die Kanne ist ein Deckel (6) aufsetzbar. Zum flüssigkeitsdichten Verschließen der Aufnahmeöffnung und/oder des Leitkanals ist ein Verschlußelement (7) vorgesehen, wobei ein Verschlußverstellelement (8) mit dem Verschlußelement bewegungsverbunden ist und für das Verschlußverstellelement ein Auslöser (10) in einem im wesentlichen seitlich von der Kanne abstehenden Traggriff (9) angeordnet ist.

Damit bei abgenommenem Deckel (6) keine Behinderung durch Verschluß- (7) oder Verschlußverstellelement (8) auftritt und gleichzeitig diese Elemente vom Auslöser (10) einfach entkoppelbar sind, sind Verschluß- und Verschlußverstellelement am Deckel angeordnet und bei auf der Kanne aufgesetztem Deckel ist das Verschlußverstellelement (8) mit dem Auslöser (10) bewegungsverbunden.

## Beschreibung

Die Erfindung betrifft eine Kanne, insbesondere eine Thermokanne, mit einem eine obere Aufnahmeöffnung aufweisenden Innenraum, einem mit dieser Aufnahmeöffnung über einen Leitkanal verbundenen Ausgießer, einem auf die Kanne aufsetzbaren Deckel, einem Verschlußelement zum flüssigkeitsdichten Verschließen von der Aufnahmeöffnung und/oder dem Leitkanal sowie einem mit dem Verschlußelement bewegungsverbundenen Verschlußverstellelement und einem im wesentlichen seitlich von der Kanne abstehenden Traggriff mit Auslöser für das Verschlußverstellelement.

Eine solche Kanne ist aus der US-A-5 265 767 bekannt. Diese vorbekannte Kanne weist einen zylindrischen Leitkanal auf, der eine obere Aufnahmeöffnung eines bauchigen Innenraums mit einem seitlich vom zylindrischen Leitkanal abstehenden Ausgießer verbindet. Der Leitkanal mündet über eine seitliche Öffnung in den Ausgießer. Der Innenseite des zylindrischen Leitkanals ist im Bereich der seitlichen Öffnung eine Klappe als Verschlußelement zugeordnet, die zwischen einer an der Innenseite anliegenden Stellung und einer gegenüber der Innenseite abgeschwenkten Stellung an ihrem oberen Ende verschwenkbar gelagert ist. Als Verschlußverstellelement ist eine mit einem Ende am Verschlußelement befestigte Stange vorgesehen, die sich quer durch den Leitkanal erstreckt und mit ihrem anderen Ende mit einem Hebelarm eines zweiarmigen Hebels verbunden ist. Dieser zweiarmige Hebel ist in einem seitlich von der Kanne im Bereich des Leitkanals abstehenden Traggriff verschwenkbar gelagert und bildet einen Teil eines Auslösers zum Verschwenken des Verschlußelementes mittels des Verschlußverstellelementes. Weiterhin umfaßt der Auslöser einen im Traggriff verschieblich gelagerten und aus diesem vorstehenden Druckstift, der mit einem Ende mit dem anderen Arm des zweiarmigen Hebelarms verbunden ist. An dem aus dem Traggriff vorstehenden Ende des Druckstiftes ist ein Druckknopf angeordnet. Weiterhin ist auf ein oberes offenes Ende des Leitkanals ein Deckel aufsetzbar.

Nachteilig bei der vorbekannten Kanne ist, daß beispielsweise beim Befüllen der Kanne Verschlußelement und Verschlußverstellelement innerhalb einer Einfüllöffnung angeordnet sind. Dadurch werden diese Elemente einerseits verschmutzt und können beschädigt werden und hindern andererseits daran die gesamte Fläche der Einfüllöffnung beispielsweise zum Einsatz eines Reinigungsgerätes für den Innenraum der Kanne zu verwenden. Weiterhin ist von Nachteil, daß durch die permanente Verbindung von Auslöser und Verschlußverstellelement diese nicht in einfacher Weise separat austauschbar sind und daß beispielsweise eine Öffnung im Leitkanal für das Verschlußverstellelement zur Verbindung mit dem Auslöser ausgebildet sein muß, durch welche Öffnung beispielsweise Flüssigkeit aus der Kanne in das Innere des Traggriffs gelangen kann.

Der Erfindung liegt daher die Aufgabe zugrunde, eine Kanne der Eingangs genannten Art dahingehend zu verbessern, daß bei abgenommenem Deckel keine Behinderung durch Verschluß- oder Verschlußverstellelement auftritt und gleichzeitig diese Elemente vom Auslöser einfach entkoppelbar sind.

Diese Aufgabe wird im Zusammenhang mit den Merkmalen des Oberbegriffs des Anspruchs 1 dadurch gelöst, daß Verschluß- und Verschlußverstellelement im Deckel angeordnet sind und bei auf der Kanne aufgesetztem Deckel das Verschlußverstellelement mit dem Auslöser bewegungsverbunden ist.

Durch die Anordnung der beiden Elemente direkt im Deckel sind diese zusammen mit dem Deckel handhabbar und nur bei auf die Kanne aufgesetztem Deckel beispielsweise in einer Position zum flüssigkeitsdichten Verschließen des Leitkanals und/oder der Aufnahmeöffnung. Weiterhin ist nur bei aufgesetztem Deckel eine Bewegungsverbindung zwischen Verschlußverstellelement und Auslöser vorhanden, so daß diese voneinander entkoppelbar und ohne Schwierigkeiten beispielsweise im Falle einer Beschädigung austauschbar sind.

Um in einfacher Weise eine Thermokanne zu erhalten, kann der Innenraum von einem in einen Kannenkörper eingesetzten Isolierkolben gebildet sein, der an seinem oberen Ende die Aufnahmeöffnung aufweist. Ein solcher Isolierkolben kann ein doppelwandiger, evakuierter und verspiegelter Glaskolben, ein doppelwandiger und evakuierter Metallkolben oder ein einwandiger, umschäumter Glas-, Metall-, beziehungsweise Kunststoffkolben sein. Ebenso kann der Kannenkörper direkt als doppelwandiger und zumindest teilevakuierter Metallkörper ausgebildet sein, so daß auf einen separaten Isolierkolben verzichtet werden kann. Weiterhin ist es möglich, daß der Kannenkörper ein Kunststoff- oder Metallkörper ist, in den einer der obenerwähnten Isolierkolben eingesetzt ist.

Weiterhin ist es als vorteilhaft anzusehen, wenn ein den Ausgießer aufweisendes Aufsetzteil auf einer Kannenoberseite lösbar befestigt ist und in Befestigungsstellung mit einem die Aufnahmeöffnung umgebenden Randbereich in Dichtanlage ist. Auf diese Weise kann das gesamte Aufsetzteil beispielsweise zum Austausch des Isolierkolbens abgenommen werden. Das Aufsetzteil kann mit der Kannenoberseite verschraubt oder verrastet werden. Außerdem kann durch das Aufsetzteil gleichzeitig eine Fixierung des Isolierkolbens innerhalb des Kannenkörpers und eine Abdichtung von dessen Aufnahmeöffnung gegenüber dem Leitkanal erfolgen.

Die Abdichtung zwischen Aufsetzteil und Isolierkolben kann in unterschiedlicher Weise erfolgen. Ein Beispiel ist die Anordnung einer Dichtung zwischen Aufsetzteil und Randbereich der Aufnahmeöffnung des Isolierkolbens.

Im Zusammenhang mit dem Aufsetzteil kann es sich als günstig erweisen, wenn dieses und der Traggriff einteilig ausgebildet sind. Auf diese Weise kann der Traggriff einerseits zum Verdrehen des Aufsetzteils relativ zum Kannenkörper bzw. Isolierkolben eingesetzt werden und andererseits ist die Anordnung des Auslösers für das Verschlußverstellelement und deren Bewegungsverbindung vereinfacht, da beispielsweise keine Verbindung zwischen Verschlußverstellelement und einem vom Kannenkörper abstehenden Traggriff hergestellt werden muß.

Bei einem einfachen Ausführungsbeispiel des Leitkanals kann dieser durch das Aufsetzteil hindurch den seitlich vom Aufsetzteil abstehenden Ausgießer mit der Aufnahmeöffnung verbinden, wobei der Leitkanal insbesondere einen im wesentlichen kreisförmigen Querschnitt aufweist und vertikal verläuft. Beim Aufsetzen des Aufsetzteils wird in diesem Zusammenhang der Leitkanal automatisch der Aufnahmeöffnung zugeordnet und flüssigkeitsdicht mit dieser verbunden.

Es ist ebenso möglich, daß der Leitkanal andere Querschnittsformen aufweist, wie eckig oder oval, wobei in diesem Zusammenhang das Verschlußelement entsprechend geformt ist. Weiterhin kann der Leitkanal beispielsweise auch schräg zwischen Aufnahmeöffnung und Ausgießer verlaufen.

Unabhängig vom Querschnitt des Leitkanals ist es für ein einfaches Anbringen des Deckels von Vorteil, wenn ein oberes Kanalende des Leitkanals zumindest teilweise von einem Aufschraubring umgeben ist, auf den der Deckel insbesondere aufschraubbar ist. Durch das Aufschrauben wird weiterhin sichergestellt, daß das Verschlußelement korrekt zum Verschließen und Öffnen insbesondere des Leitkanals positioniert wird. Ebenso ist es möglich, daß der Deckel positionsgenau aufgesteckt wird, wobei das Verschlußelement auch so ausgebildet sein kann, daß es in Verschlußstellung den Leitkanal insgesamt verschließt und in Öffnungsstellung diesen insgesamt in Richtung Ausgießer öffnet.

Ein einfaches Ausführungsbeispiel für einen Deckel kann darin gesehen werden, daß der Deckel ein im wesentlichen ringförmiges Unterteil zur Lagerung von Verschluß- und Verschlußverstellelement und eine auf das Unterteil aufgesetzte Verschlußkappe aufweist. Gegebenenfalls kann die Verschlußkappe auch lösbar an dem Unterteil befestigt sein.

Zum einfachen Befestigen des Deckels am Aufschraubring kann das Unterteil einen mit einem Außengewinde versehenen Schraubring zum Einschrauben in den Aufschraubring und einen radial am oberen Ende des Schraubrings nach außen vorstehenden Auflagering aufweisen. Dabei kann das Unterteil mittels des Schraubrings so weit in den Aufschraubring eingeschraubt werden, bis der Auflagering mit seiner Unterseite am oberen Ende des Aufschraubrings aufliegt. In dieser Stellung ist dann beispielsweise sichergestellt, daß einerseits das Verschlußelement richtig positioniert ist und andererseits in dessen Schließstellung eine flüssigkeitsdichte Abdichtung des Innenraums gegenüber dem Ausgießer gewährleistet ist.

Die Verbindung zwischen Verschlußelement und Deckel kann in unterschiedlicher Weise erfolgen. Beispielsweise könnte das Verschlußelement ähnlich wie bei der Eingangs geschilderten Kanne als Verschlußklappe ausgebildet sein, die an einem Ende gemäß Erfindung verschwenkbar im Deckel gelagert ist. Um allerdings das Verschlußelement im wesentlichen selbsttätig in die Verschlußstellung zu drücken und eine einfache Verbindung zum Deckel herzustellen, kann der Schraubring mit einer zu seiner Unterseite offenen Ringnut ausgebildet sein, in welcher ein oberer Randflansch eines federelastischen Balgelementes einsetzbar ist, dessen dem Leitkanal bzw. der Aufnahmeöffnung zuweisendes unteres Ende sich auf dem im Deckel verstellbar gelagerten Verschlußelement abstützt. Dadurch wird das Verschlußelement aufgrund der Eigenelastizität des Balgelementes bei aufgesetztem Deckel in Dichtanlage mit beispielsweise dem Leitkanal gebracht und kann gegen die Elastizität des Balgelementes in eine Öffnungsstellung ausgelenkt werden.

Ein einfaches federelastisches Balgelement ist dadurch realisierbar, daß es einen unteren Hohlabschnitt und einen oberen Hohlabschnitt aufweist, wobei der Innendurchmesser des unteren Hohlabschnitts geringer als der Innendurchmesser des oberen Hohlabschnitts ist und wobei der obere Hohlabschnitt durch den in die Ringnut des Schraubrings eingesetzten Randflansch gebildet ist. Vorzugsweise ist ein solches Balgelement aus einem lebensmittelunbedenklichen Gummimaterial hergestellt. Gleichzeitig wird durch ein solches Balgelement ein Fließen des Mediums durch den Deckel in einfacher Weise verhindert.

Um eine verbesserte Abdichtung der Ringnut und auch des Inneren des Deckels zu erhalten, kann am unteren Ende des Randflansches ein im wesentlichen radial nach außen abstehender Anlagerand ausgebildet sein, welcher an ein unteres Ende der Ringnut anlegbar ist. Dadurch ergibt sich eine labyrinthartige Abdichtung zwischen Balgelement mit Anlagerand und Randflansch sowie Unterseite des Schraubrings.

Die vorangehend genannte Abdichtung kann weiterhin dadurch verbessert werden, wenn der Schraubring einen über die Ringnut nach unten in Richtung Aufschraubring vorstehenden und radial zur Ringnut nach außen versetzten Fußrand aufweist, an dem von innen der Anlagerand anliegt.

Um eine gute Abdichtung zu erzielen, kann das Verschlußelement eine tellerförmige Dichtplatte aufweisen, von deren Unterseite ein in den Leitkanal bzw. in die Aufnahmeöffnung einsetzbarer Einsteckring absteht. Durch Einsteckring und Unterseite der Dichtplatte erhält man bei Verschlußelement in Dichtstellung eine gute Abdichtung zwischen Aufnahmeöffnung und Ausgießer.

Um bei Verschlußelement in Öffnungsstellung den Inhalt der Kanne gezielt dem Ausgießer zuführen zu können, kann der Einsteckring zumindest eine dem Ausgießer zuweisende Radialöffnung aufweisen. Durch diese fließt der Inhalt der Kanne in Richtung Ausgießer, wobei gleichzeitig die Menge des ausfließenden Materials begrenzt werden kann.

Um die Abdichtung zwischen Balgelement und Verschlußelement zu verbessem, kann die Dichtplatte einen im wesentlichen nach oben in Richtung Balgelement geneigten Plattenrand aufweisen, wobei an dessen Innenseite und einer Plattenoberseite der Dichtplatte ein wulstförmiges unteres Ende des unteren Hohlabschnitts des Balgelementes anliegt.

Um das Verschlußelement in einfacher Weise am Verschlußverstellelement zu lagem und gleichzeitig gegen die Federelastizität des Balgelementes in Öffnungsstellung bewegen zu können, können von der Plattenoberseite zumindest zwei Lagerarme abstehen, welche am Verschlußverstellelement gelagert sind. Die Lagerarme erstrecken sich durch den unteren und oberen Hohlabschnitt des Balgelementes, wobei das Innere dieser Hohlabschnitte durch die Anlage des unteren Endes des Balgelementes an der Dichtplatte und des oberen Endes des Balgelementes in der Ringnut abgedichtet ist.

Vorzugsweise kann das Verschwenkverstellelement im wesentlichen an einem Ende im Deckel verschwenkbar gelagert und mit seinem anderen Ende in Aufsetzstellung des Deckels mit dem Auslöser bewegungsverbunden sein. Durch den Auslöser wird auf diese Weise das Verschlußverstellelement verschwenkt und durch dessen Verschwenken über die Lagerarme das Verschlußelement in die Öffnungsstellung bewegt. Wird der Auslöser nicht mehr betätigt, bewegt sich das Verschlußelement selbsttätig durch die Federelastizität des Balgelementes in die Dicht- oder Ausgangsstellung zurück.

Ein einfaches Ausführungsbeispiel für ein Verschlußverstellelement kann dann gesehen werden, wenn das Verschlußverstellelement wenigstens zweiteilig aus Lagerteil und Verbindungsteil aufgebaut ist, wobei das Lagerteil im Deckel an seinem Lagerende verschwenkbar gelagert ist und an seinem Tragende die Lagerarme verschwenkbar gelagert sind. Zur Übertragung der Auslöserbetätigung auf das Verschlußverstellelement, sind Lagerteil und Verbindungsteil miteinander bewegungsverbunden.

Zur einfachen Lagerung des Lagerteils können von diesem zwei Achsstummel abstehen, die von im Deckel angeordneten Lagerlaschen insbesondere lösbar aufgenommen sind.

Zum vereinfachten Einsetzen der Achsstummel in die Lagerlaschen, können diese als Rastlaschen mit radial nach außen geöffneten Rastöffnungen ausgebildet sein. Über die Rastöffnungen sind die Achsstummel in die Rastlaschen einrastbar und dort verschwenkbar gelagert.

In entsprechender Weise können zwei Achsstummel vom Tragende seitlich abstehen, die in Lageröffnungen im wesentlichen an oberen Enden der Lagerarme einsetzbar sind.

Im einfachsten Fall können Verbindungsteil und Lagerteil zum Verschwenken bewegungsverbunden sein und in Aufsetzstellung des Deckels kann das Verbindungsteil mit einem in Richtung Deckel aus dem Traggriff vorstehenden Eingriffsende des Auslösers in Eingriff sein. Der Eingriff wird dabei erst bei Erreichen der Aufsetzstellung des Dekkels erreicht.

Zur vereinfachten Herstellung eines Verbindungsteils und dessen vereinfachter Lagerung im Deckel, kann das Verbindungsteil in etwa L-förmig sein, wobei ein längerer L-Schenkel in einem Führungsschlitz im Auflagering in radialer Richtung verschieblich gelagert ist und ein kürzerer L-Schenkel aus dem Führungsschlitz nach unten vorsteht und einen nach oben gerichteten Anschlag am Eingriffsende des Auslösers hintergreifen kann .

Zur einfachen Herstellung einer Bewegungsverbindung von Verbindungsteil und Lagerteil, können diese mittels eines beispielsweise elastischen Bandes verbunden sein. Dieses kann mit einem Ende an einem vom Lagerende des Lagerteils nach unten abstehenden Anschlußarm und mit seinem anderen Ende an einer Unterseite des langen L-Schenkels befestigt sein. Dadurch ist das Lagerteil im wesentlichen als zweiarmiger Hebel ausgebildet, wobei ein Hebelarm durch den Anschlußarm gebildet ist und der andere Hebelarm mit dem Tragende ausgebildet ist. Die Lagerung des Hebels erfolgt im wesentlichen am Lagerende. Die beiden Hebelarme schließen vorzugsweise einen spitzen Winkel ein. Allerdings kann dieser Winkel auch rechtwinklig oder stumpf sein.

Ein gut handhabbarer Traggriff ergibt sich dadurch, wenn dieser bogenförmig von der Kanne absteht bzw. in Richtung Kanne konkav gekrümmt verläuft. Erfindungsgemäß kann der Traggriff in seinem Inneren einen Hohlraum aufweisen, in dem der im wesentlichen aus einem Federband gebildete Auslöser angeordnet ist. Als Betätigungselement für den Auslöser steht vom Federband in Richtung Kanne aus dem Traggriff ein Triggerelement vor. Durch Drücken des Triggerelementes in Richtung Traggriff wird das Federband im wesentlichen von der Kanne wegbewegt und an eine Innenseite des Hohlraums angelegt. Durch das Verstellen des Federbandes wird dessen Eingriffsende ebenfalls radial nach außen bezüglich des Deckels bewegt und verschwenkt über die Bewegungsverbindung mit dem Verbindungsteil und dessen Verbindung über das Band zum Lagerteil dieses um seine Schwenkachse in beispielsweise Gegenuhrzeigerrichtung. Dadurch wird das Tragende in Richtung Verschlußkappe bewegt und über die Bewegungsverbindung mittels der Lagerarme wird ebenfalls das Verschlußelement gegen die federelastische Wirkung des Balgelementes nach oben bewegt, wodurch eine Fluidverbindung zwischen Aufnahmeöffnung und Ausgießer hergestellt ist. Wird das Triggerelement nicht mehr betätigt, erfolgt eine Rückstellung des Verschlußelementes insbesondere durch das Balgelement, wobei die Rückstellung des Verschlußelementes sowie auch von Lagerteil und Verbindungsteil durch die Elastizität des Federbandes des Auslösers unterstützt wird.

Ein gut durch eine Hand zu betätigendes Triggerelement kann dadurch erhalten werden, daß dieses aus einem in Richtung Kanne vorstehendem Scheibensegment gebildet ist.

Eine gute Bewegungsmimik für das Federband bei gleichzeitig guter Ausnutzung dessen Elastizität ergibt sich, wenn das Federband an seinem dem Eingriffsende gegenüberliegenden Lagerende im unteren Ende des Traggriffs verschwenkbar gelagert ist.

Um das Aufschrauben des Deckels auf den Aufschraubring ungehindert durchführen zu können, kann der Anschlag des Eingriffsendes in Ausgangsstellung des Federbandes in einer Umfangsvertiefung des Aufschraubrings versenkt angeordnet sein. Ist der Deckel mittels seines Schraubrings dann bis in Aufsetzstellung aufgeschraubt, hintergreift der kürzere L-Schenkel des Verbindungsteils den Anschlag am Eingriffsende des Auslösers bzw. des Federbandes.

Um die Öffnungsstellung des Verschlußelementes festzulegen, kann das Federband mit einem im Hohlraum des Traggriffs angeordneten Federelement und/oder ein Vorsprung am längeren L-Schenkel des Verbindungsteils mit einem Gegenanschlag auf der Innenseite des Auflagerings in Anlage sein.

Um bei einem anderen Ausführungsbeispiel der Erfindung die Aufsetzstellung des Dekkels in einfacher Weise festzulegen, kann vom Deckelunterteil ein Anschlagelement abstehen, das zur Festlegung der Aufsetzstellung des Deckels mit einem Gegenanschlagelement im Aufsetzteil in Anlage bringbar ist. Folglich kann der Deckel nur so weit aufgeschraubt werden, bis Anschlagelement und Gegenanschlagelement in Anlage sind.

Ein einfaches Ausführungsbeispiel für solche Anschlag- und Gegenanschlagelemente kann beispielsweise darin gesehen werden, wenn das Anschlagelement vom Außengewinde im wesentlichen senkrecht in Richtung Verschlußkappe absteht und das Gegenanschlagelement ein in Aufschraubrichtung des Deckels weisendes Ende eines auf einer Innenwand des Aufschraubringes ausgebildeten Innengewindes ist.

Um ein Lösen des Deckels aus seiner Aufsetzstellung in gewissem Maße zu erschweren und gleichzeitig den Deckel in seiner Aufsetzstellung zu sichem, kann das Anschlagelement in Aufsetzstellung des Deckels reibschlüssig gehalten sein. Dies kann beispielsweise durch eine entsprechende in Richtung Anschlagelement vorstehende Erhöhung auf der Innenwand des Aufschraubringes sein, die in Aufsetzstellung des Deckels in Reibungskontakt mit dem Anschlagelement gerät.

Eine einfache Verbindung zwischen Aufsetzteil und Kannenkörper ergibt sich dadurch, daß das Aufsetzteil auf den Kannenkörper aufschraubbar und/oder aufrastbar ist.

Der erwähnte Führungsschlitz kann in dem Auflagering des Unterteils angeordnet sein. Bei anderen Ausführungsbeispielen der Erfindung kann auf eine separate Ausbildung eines solchen Führungsschlitzes verzichtet werden, wobei durch entsprechende Ausbildung von Unterteil und Verschlußkappe zwischen diesen beiden der Führungsschlitz ausgebildet ist.

Um die Führung des Auslösers beziehungsweise Triggerelements relativ zum Aufsetzteil zu verbessem, kann das Aufsetzteil wenigstens eine im wesentlichen radial nach außen vorstehende Gleitfläche aufweisen, auf der ein entsprechendes Gleitteil des Auslösers beziehungsweise Triggers aufliegt.

Um in einfacher Weise eine Verbindung zwischen Aufsetzteil und Kannenkörper herzustellen, kann ein Schraubeinsatz innerhalb des Kannenkörpers angeordnet sein, mit dem das Aufsetzteil verschraubbar ist. Dieser Schraubeinsatz kann einteilig mit oder auch separat zum Kannenkörper ausgebildet sein.

Bei den bisher geschilderten Ausführungsbeispielen gemäß Erfindung ist das Verschlußverstellelement gegenüberliegend zum Auslöser beziehungsweise Traggriff, das heißt benachbart zum Ausgießer, verschwenkbar gelagert. Bei einem anderen Ausführungsbeispiel kann das Verschlußverstellelement auch innerhalb des Unterteils auf Seiten des Traggriffes verschwenkbar gelagert sein.

In diesem Zusammenhang ist es weiterhin als günstig zu betrachten, wenn das Verschlußverstellelement aus dem Lagerteil und dem Band gebildet ist, welches an dem Traggriff gegenüberliegenden Ende des Lagerteils befestigt ist. Zwischen dem gelagerten Ende des Lagerteils und dem Ende, an dem das Band befestigt ist, ist das Lagerteil in bereits beschriebener Weise mit dem Verschlußelement bewegungsverbunden.

Bei einem noch weiteren Ausführungsbeispiel gemäß der Erfindung kann auf ein separates Verbindungsteil als Teil des Verschlußverstellelements verzichtet werden, wobei in diesem Fall das Band an seinem freien Ende zum Hintergreifen des Eingriffendes hakenförmig ausgebildet sein kann. Dadurch erfolgt eine direkte Bewegungsverbindung zwischen Band und Eingriffsende, das heißt Auslöser beziehungsweise Trigger.

Im folgenden wird ein vorteilhaftes Ausführungsbeispiel der Erfindung anhand der in der Zeichnung beigefügten Figuren näher erläutert und beschrieben.

### Es zeigen:

- Fig. 1: eine Seitenansicht einer erfindungsgemäßen Kanne;
- Fig. 2: eine Draufsicht auf die Kanne nach Fig. 1 mit abgenommenem Deckel;
- Fig. 3: eine Seitenansicht eines abgenommenen Deckels;
- Fig. 4: eine Draufsicht von unten auf den Deckel nach Fig. 3;
- Fig. 5: ein Verschlußelement, wie es im Deckel nach Fig. 3 und 4 gelagert ist;
- Fig. 6: eine Seitenansicht eines Balgelementes zwischen Verschlußelement und Deckel;
- Fig. 7: eine Ansicht von unten auf einen Deckel analog zu Fig. 4 mit entfemtem Verschlußelement und Balgelement nach Fig. 5 und 6;
- Fig. 8: einen Schnitt entlang der Linie VIII-VIII aus Fig. 7;
- Fig. 9: eine Draufsicht auf ein Verschlußverstellelement;
- Fig. 10: eine Seitenansicht des Verschlußverstellelementes nach Fig. 9;
- Fig. 11: einen Schnitt entlang der Linie XI-XI aus Figur 2 durch ein weiteres Ausführungsbeispiel einer erfindungsgemäßen Kanne;
- Fig. 12: einen Schnitt entlang der Linie XII-XII nach Figur 2 durch das Ausführungsbeispiel nach Figur 11;
- Fig. 13: einen Schnitt analog zu Figur 11 durch ein drittes Ausführungsbeispiel gemäß Erfindung;
- Fig. 14: einen Schnitt analog zu Figur 11 durch ein viertes Ausführungsbeispiel gemäß Erfindung, und
- Fig. 15: einen Schnitt analog zu Figur 11 durch ein fünftes Ausführungsbeispiel gemäß Erfindung.

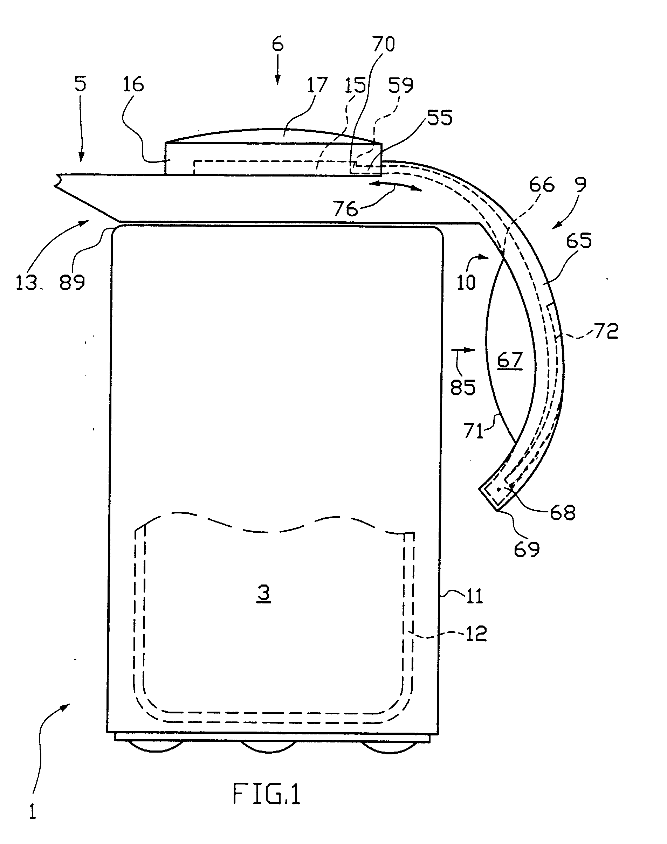

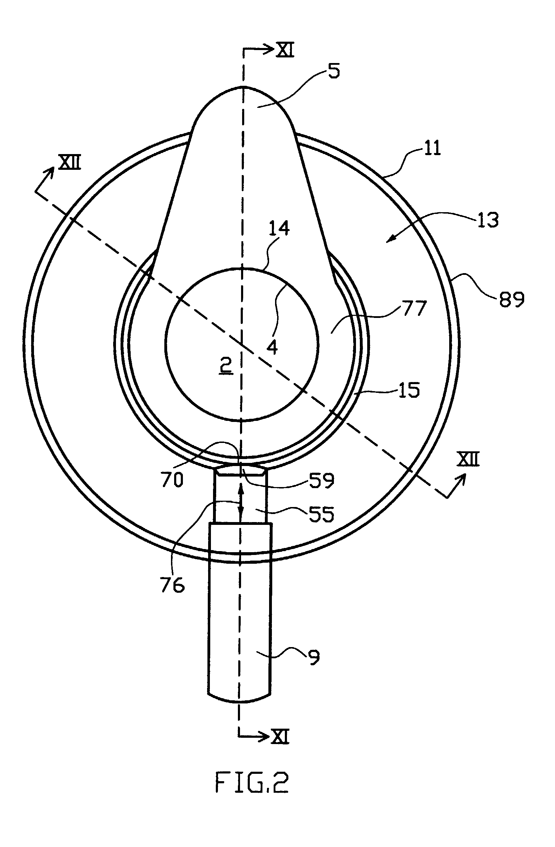

In Fig. 1 ist eine Seitenansicht einer erfindungsgemäßen Kanne 1 dargestellt. Diese weist einen zylindrischen Kannenkörper 11 auf, in dem ein teilweise dargestellter Isolierkolben 12 angeordnet ist. Dieser umschließt einen Innenraum 3, der am oberen Ende in eine Aufnahmeöffnung 2 mündet, siehe Fig. 2.

Der Kannenkörper 11 weist auf seiner Unterseite eine Bodenplatte mit Füßen und auf seiner Oberseite 89 ein Aufsetzteil 13 auf. Dieses weist einen seitlich abstehenden Ausgießer 5 und diesem gegenüberliegend einen Traggriff 9 auf. Auf dem Aufsetzteil 13 ist ein Deckel 6 zum Verschließen von Aufnahmeöffnung 2 bzw. Leitkanal 4, siehe Fig. 2, aufgesetzt.

Der Deckel 6 ist aus einem Unterteil 16 und einer auf diesem angeordneten Verschlußkappe 17 gebildet.

Bei Deckel 6 in Aufsetzstellung, siehe Fig. 1, ist dieser auf einem Aufschraubring 15 aufgeschraubt, der auf der dem Ausgießer 5 gegenüberliegenden Seite eine Umfangsvertiefung 70 aufweist. In dieser ist ein Anschlag 59 an einem Eingriffsende 55 eines Auslösers 10 zumindest teilweise versenkt angeordnet. Der Auslöser 10 weist ein mit dem Eingriffsende 55 und Anschlag 59 versehenes Federband 66 bzw. Streifen 66 auf, der sich in einem Hohlraum 65 des Traggriffs 9 bis zu dessen unteren Ende 69 erstreckt. Der Streifen 66 ist auf seiner zum Kannenkörper 11 weisenden Seite mit einem durch ein Scheibensegment 71 gebildeten Triggerelement 67 ausgebildet. Dieses steht aus dem Hohlraum 65 vom Traggriff 9 in Richtung Kannenkörper 11 vor.

Der Streifen 66 bzw. das Federband 66 ist an seinem dem Eingriffsende 55 gegenüberliegenden Lagerende 68 im unteren Ende 69 des Traggriffs 9 verschwenkbar gelagert. Zumindest einem sich zwischen in etwa Mitte des Triggerelementes 67 und Lagerende 68 erstreckendem Abschnitt des Federbandes 66 ist im Hohlraum 65 auf der dem Triggerelement 67 abgewandten Seite ein Federelement 72 zugeordnet, daß das Triggerelement 67 in Richtung Kannenkörper kraftbeaufschlagt.

In Fig. 2 ist eine Draufsicht auf die Kanne nach Fig. 1 mit abgenommenem Deckel 6 dargestellt. Durch Betätigen des Triggerelementes 67 in Betätigungsrichtung 85, siehe Fig. 1, ist das Eingriffsende 55 mit Anschlag 59 in Bewegungsrichtungen 76 bewegbar, siehe Fig. 1 und 2.

Mittig im Aufsetzteil 13 ist der Leitkanal 4 ausgebildet, der den Ausgießer 5 mit der Aufnahmeöffnung 2 verbindet. An einem oberen Ende 14 ist der Leitkanal 4 zumindest teilweise von dem Aufschraubring 15 umgeben, wobei dieser in Richtung Ausgießer 5 unterbrochen ist. Der Aufschraubring 15 weist auf einer Innenwand 77 ein Innengewinde auf, mit dem der Deckel 6 verschraubbar ist. Das Aufsetzteil 13 ist im wesentlichen tellerförmig ausgebildet mit an ihm angeformtem Ausgießer 5 und Traggriff 9. Von der Telleroberseite steht der Aufschraubring 15 ab, wobei Leitkanal 4, Aufschraubring 15 und tellerförmiger Teil des Aufsetzteils 13 konzentrisch zueinander angeordnet sind.

Im Außenumfang des Aufschraubteils 15 ist auf der dem Traggriff 9 zuweisenden Seite die Umfangsvertiefung 70 ausgebildet, in der der Anschlag 59 zumindest teilweise versenkt angeordnet ist.

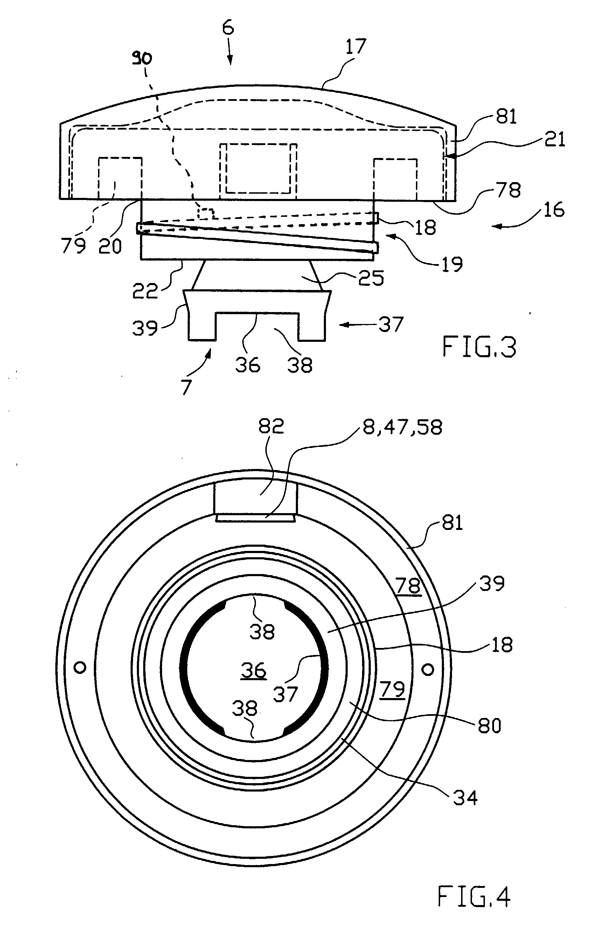

Fig. 3 zeigt eine Seitenansicht des Deckels 6 nach Fig. 1. Dieser ist aus Unterteil 16 und Verschlußkappe 17 gebildet. Das Unterteil 16 umfaßt einen Auflagering 21 und einen Schraubring 19. Auf dem oberen Ende des Auflagerings 21 ist die Verschlußkappe 17 angeordnet, wobei diese einen den Auflagering 21 außen in Umfangsrichtung umgebenden Deckelrand 81 umfaßt.

Der Auflagering 21 steht radial nach außen über den Schraubring 19 über und weist radial außenliegend eine untere Auflagefläche 78 auf, die eine Oberseite des Aufsetzteils 13 außerhalb des Aufschraubrings 15 in Aufsetzstellung des Deckels 6 kontaktiert.

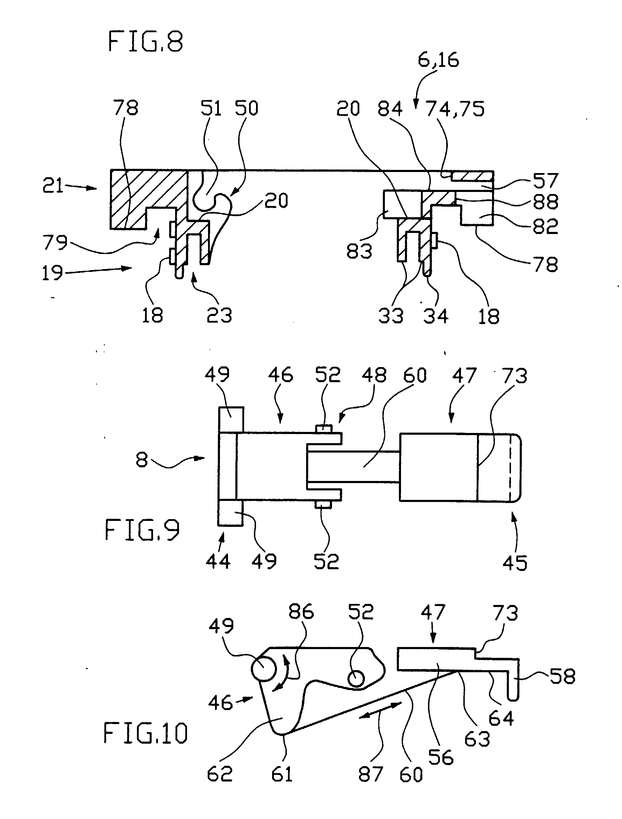

Radial nach innen versetzt zur Auflagefläche 78 ist ein Ringraum 79 angeordnet, in dem eine Bewegungsverbindung und gemeinsame Bewegung von Verschlußverstellelement 8 und Auslöser 10 stattfindet, siehe beispielsweise Fig. 2, 4 und 8. Zumindest an einer Stelle weist der Ringraum 78 einen Durchbruch 82, siehe Fig. 4 und 8, nach außen auf, indem in Aufsetzstellung des Deckels 6 das Eingriffsende 55 des Auslösers 10, siehe Fig. 2, angeordnet ist.

Der Auflagering 21 ist am oberen Ende 20 des Schraubrings 19 mit diesem verbunden, wobei ein Außendurchmesser des Schraubrings 19 dem Innendurchmesser des Ringraums 79 entspricht.

Der Schraubring 19 weist auf seiner Außenseite ein Außengewinde 18 auf, das mit dem Innengewinde des Aufschraubrings 15, siehe Fig. 2, verschraubbar ist. Vom Außengewinde 18 steht an einer Stelle ein Anschlagelement 90 in etwa senkrecht in Richtung Verschlußkappe 17 ab. Dieses Anschlagelement 90 gerät in Aufsetzstellung des Dekkels 6 mit einem nicht dargestellten Gegenanschlagelement zur Festlegung der Aufsetzstellung in Anlage. Dieses Gegenanschlagelement ist beispielsweise als ein in Aufschraubrichtung des Deckels weisendes Ende eines auf einer Innenwand 77 des Aufschraubringes 15 gebildeten Innengewindes ausgebildet, siehe Figur 2 und zugehörige Beschreibung. Weiterhin kann das Anschlagelement zur Sicherung der Aufsetzstellung des Deckels einen in Aufschraubrichtung des Deckels vor dem obengenannten Ende des Innengewindes angeordneten Reibvorsprung aufweisen, von dem das Anschlagelement in Aufsetzstellung des Deckels reibschlüssig gehalten ist.

Von einer Unterseite 22 des Schraubrings 19 steht ein Verschlußelement 7 vor, zwischen welchem und der Unterseite 22 des Schraubrings 19 ein federelastisches Balgelement 25 sichtbar ist.

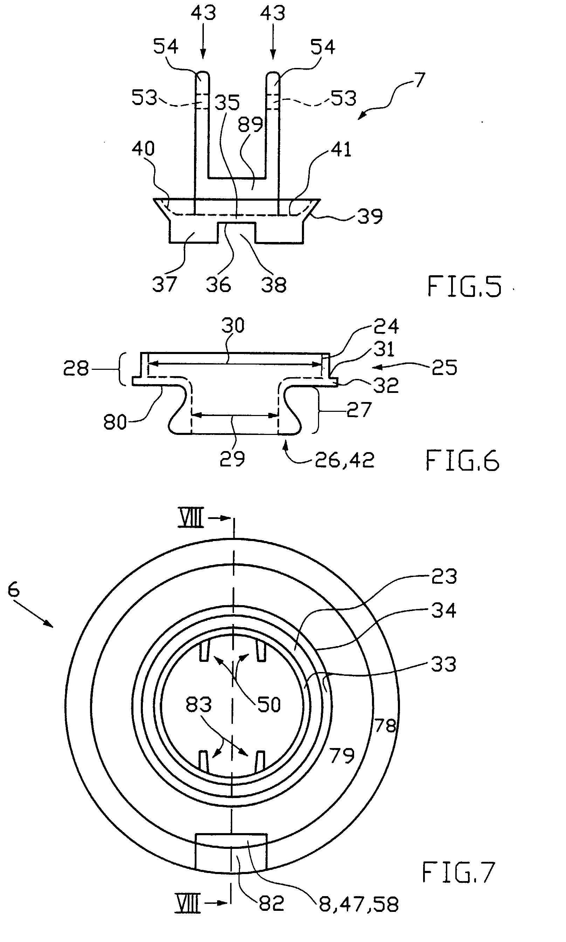

Das Verschlußelement 7 weist einen schräg außen und oben in Richtung Unterseite 22 des Schraubrings 19 geneigten Plattenrand 39 auf, an dem sich in Richtung nach unten ein Einsteckring 37 anschließt. Dieser steht von einer Unterseite 36 einer mit dem Plattenrand 39 ausgebildeten Dichtplatte 35, siehe Fig. 5, nach unten ab und weist zwei gegenüberliegende Radialöffnungen 38 auf, siehe Fig. 3 und 4.

In Fig. 4 ist eine Unteransicht des Deckels 6 nach Fig. 3 dargestellt. Gleiche Bauteile sind mit gleichen Bezugszeichen versehen und werden nur noch teilweise erwähnt.

Deckelrand 81, Auflagefläche 78, Ringraum 79, Außengewinde 18, Fußrand 34 (siehe Fig. 8), Flachseite 80 (siehe Fig. 6), Plattenrand 39 und Einsteckring 37 sind von außen nach innen aufeinanderfolgend konzentrisch zueinander angeordnet.

In der Auflagefläche 78 ist der Durchbruch 82 ausgebildet, in den zumindest teilweise ein kürzerer L-Schenkel 58 eines Verbindungsteils 47 als Teil des Verschlußverstellelementes 8, siehe Fig. 9 und 10, hineinragt.

In Fig. 5 ist eine Seitenansicht des Verschlußelementes 7, siehe Fig. 3, dargestellt. Von der Dichtplatte 35 des Verschlußelementes 7 steht radial nach außen und oben geneigt der Plattenrand 39 ab. Dieser weist eine Innenseite 40 auf, die in eine Plattenoberseite 41 übergeht. Auf der Plattenunterseite 36 steht der Einsteckring 37 mit den Radialöffnungen 38 ab.

In etwa mittig von der Plattenoberseite 41 steht ein Ringelement 89 ab. Dieses ist an zwei gegenüberliegenden Stellen unter Bildung von Lagerarmen 43 nach oben verlängert. Die Lagerarme 43 erstrecken sich parallel zueinander bis zu oberen Enden 54 und weisen dort zwei gegenüberliegende koaxiale Lageröffnungen 53 auf.

In Fig. 6 ist eine Seitenansicht des Balgelementes 25 nach Fig. 3 dargestellt. Dieses weist einen unteren Hohlabschnitt 27 und einen oberen Hohlabschnitt 28 auf. Der untere Hohlabschnitt ist mit einem Innendurchmesser 29 und der obere Hohlabschnitt 28 mit einem Innendurchmesser 30 ausgebildet, wobei der Innendurchmesser 29 kleiner als der Innendurchmesser 30 ist. Am unteren Ende 26 des Balgelementes 25 bzw. am unteren Ende 42 des unteren Hohlabschnitts 27 ist dieser wulstartig nach außen erweitert. Diese wulstartige Erweiterung ist im Bereich zwischen Ringelement 89, Plattenoberseite 41 und Innenseite 40 des Plattenrandes 39 anordbar. Der Innendurchmesser 29 entspricht dabei im wesentlichen dem Außendurchmesser des Ringelementes 89.

Der obere Hohlabschnitt 28 weist eine gegenüber dem unteren Hohlabschnitt 27 radial nach außen verlaufende flache Unterseite 80 auf, von der ein Randflansch 24 senkrecht nach oben absteht. An dessen unterem Ende 31 steht in Verlängerung der flachen Unterseite 80 ein Anlagerand 32 radial nach außen vor.

In Fig. 7 ist eine Unteransicht des Deckels 6 analog zu Fig. 4 ohne Verschlußelement 7 und Balgelement 25 dargestellt. Gleiche Teile sind wiederum mit gleichen Bezugszeichen versehen und werden nur noch teilweise erwähnt.

In einer im Schraubring 19 ausgebildeten Öffnung sind Lagerlaschen 50 und Auflageleisten 83 sichtbar, siehe auch Fig. 8. Diese sind einander gegenüberliegend angeordnet, wobei die Auflageleisten 83 benachbart zum Durchbruch 82 in der Auflagefläche 78 des Auflagerings 21 angeordnet sind und in Richtung Durchbruch verlaufen. Die in dem Schraubring 19 ausgebildete Öffnung ist von einer Ringnut 23 umgeben, die seitliche untere Enden 33 aufweisen. An die Ringnut 23 schließt sich radial nach außen der Fußrand 34 auf, der in Richtung Aufsetzteil 13 bei aufgesetztem Deckel 6 über die Ringnut 23 nach unten vorsteht.

Es ist zu beachten, daß in Fig. 7 die Verschlußkappe 17 mit Deckelrand 81 nicht dargestellt ist.

In Fig. 8 ist ein Schnitt entlang der Linie VIII-VIII aus Fig. 7 dargestellt. Wiederum fehlt die Verschlußkappe 17 und gleichen Teilen sind wiederum gleiche Bezugszeichen zugeordnet, so daß diese nur noch teilweise erwähnt werden.

Die Lagerlaschen 50 sind als Rastlaschen ausgebildet. Diese weisen eine über eine radial nach außen geöffnete Rastöffnung 51 zugängliche Lageröffnung auf. Gemäß Fig. 7 sind zwei der Lager- oder Rastlaschen 50 im Abstand zueinander angeordnet. Die Laschen 50 stehen von einer Innenseite des Auflagerings 21 und des Schraubrings 19 ab.

Gegenüberliegend zu den Laschen 50 sind die Auflageleisten 83 angeordnet, die vom oberen Ende 20 des Schraubrings 19 abstehen und zusammen mit einem Führungsschlitz 57 im Auflagering 21 eine Gleitfläche 84 für das Verbindungsteil 47, siehe Fig. 9 und 10, bildet. Der Führungsschlitz 57 erstreckt sich radial nach außen und ist im Bereich des Durchbruchs 82 angeordnet. Weiterhin ist dem Durchbruch 82 ein Anlagerand 88 unterhalb des Führungsschlitzes 57 zugeordnet, mit dem der kürzere L-Schenkel 58, siehe Fig. 4 und 7, bei Verschlußverstellelement 8 in Ausgangsstellung in Anlage ist.

In Fig. 9 ist eine Draufsicht auf das Verschlußverstellelement 8 dargestellt. Dieses ist aus Lagerteil 46 und Verbindungsteil 47 aufgebaut, die mittels eines Bandes 60 bewegungsverbunden sind.

Das Lagerteil 46 weist an einem als Lagerende 44 ausgebildeten Ende zwei seitlich nach außen abstehende und gegenüberliegend angeordnete Achsstummel 49 auf. Diese sind in die beiden Rastlaschen 50 durch die Rastöffnungen 51 eindrückbar und anschließend dort verschwenkbar gelagert.

Am zum Lagerende 44 gegenüberliegenden Tragende 48 des Lagerteils 46 stehen zwei weitere Achsstummel 52 seitlich und einander gegenüberliegend nach außen ab. Diese dienen zum Einsetzen in die Lageröffnungen 53 an oberen Enden 54 der Lagerarme 43, siehe Fig. 5.

Durch die Lagerung des Lagerteils 46 in Rastlaschen 50 mittels der Achsstummel 49, ist das Lagerteil 46 in Verschwenkrichtungen 86, siehe Fig. 10, verschwenkbar. Unterhalb der Achsstummel 49 steht nach unten ein Anschlußarm 62 des Lagerteils 46 ab, an dessen freiem Ende ein Ende 61 des Bandes 60 befestigt ist. Im wesentlichen ist das Lagerteil 46 als zweiarmiger Hebel ausgebildet, wobei der Anschlußarm 62 ein Hebelarm und der mit dem Tragende 48 ausgebildete Teil des Lagerteils 46 der andere Hebelarm ist.

Das Verbindungsteil 47 ist in Seitenansicht im wesentlichen L-förmig mit einem längeren L-Schenkel 56 und einem dazu rechtwinklig angeordneten kürzeren L-Schenkel 58. Der längere L-Schenkel 56 weist auf einer Oberseite einen Vorsprung 73 auf, der mit einem Gegenanschlag 74 auf einer Innenseite 75 des Auflagerings 21, siehe Fig. 8, in Anlage bringbar ist. Auf der Unterseite 64 des längeren L-Schenkels 56 ist ein weiteres Ende 63 des Bandes 60 befestigt. Der kürzere L-Schenkel 58 hintergreift bei aufgesetztem Dekkel 6 den Anschlag 59, siehe Fig. 2 und 4, wodurch eine Bewegungsverbindung zwischen Auslöser 10 und Verschlußverstellelement 8 hergestellt ist.

Wie bereits im Zusammenhang mit Fig. 1 ausgeführt, wird bei Betätigen des Triggerelementes 67 in Betätigungsrichtung 85 der Anschlag 59 aus der Umfangsvertiefung 70, siehe Fig. 2, in Richtung Traggriff 9 herausbewegt. Durch das Ineinandergreifen von kürzerem L-Schenkel 58 und Anschlag 59 wird durch die Bewegung des Anschlags 59 in Richtung Traggriff 9 das Verbindungsteil 47 entlang des Führungsschlitzes 57, siehe Fig. 8, ebenfalls in Richtung Traggriff 9 bewegt. Dadurch wird das an der Unterseite 64 des Verbindungsteils 47 befestigte Band 60 in Fig. 9 oder 10 nach rechts bewegt. Durch die Verbindung des Bandes 60 mit dem Anschlußarm 62 des Lagerteils 46 wird dieses in den Rastlaschen 50 im Gegenuhrzeigersinn verschwenkt, wodurch das Tragende 48 in Richtung Verschlußkappe 17 nach oben verschwenkt wird. Entsprechend werden die an den Achsstummeln 52 gelagerten Lagerarme 43 des Verschlußelementes 47 zusammen mit dem übrigen Verschlußelement ebenfalls in Richtung Verschlußkappe 17 nach oben bewegt. Dies erfolgt gegen eine von dem zwischen Schraubring 19 und Dichtplatte 35 angeordneten Balgelement 25 ausgeübte, in Richtung Aufnahmeöffnung 2 wirkende Rückstellkraft. Durch Anheben des Verschlußelementes 7 wird eine Fluidverbindung zwischen Aufnahmeöffnung 2 und Ausgießer 5 hergestellt.

Nach Loslassen des Triggerelementes 67 erfolgt eine Rückstellung des Verschlußelementes 7 zur Unterbrechung dieser Fluidverbindung aufgrund der Rückstellkraft des Balgelementes und des sich im Griffhohlraum 65 abstützenden Federelementes 72 sowie einer gegebenenfalls ebenfalls wirksamen Rückstellkraft des Bandes 66 des Auslösers 10. Dabei werden alle vorangehend genannten Bewegungen in umgekehrter Richtung vollführt.

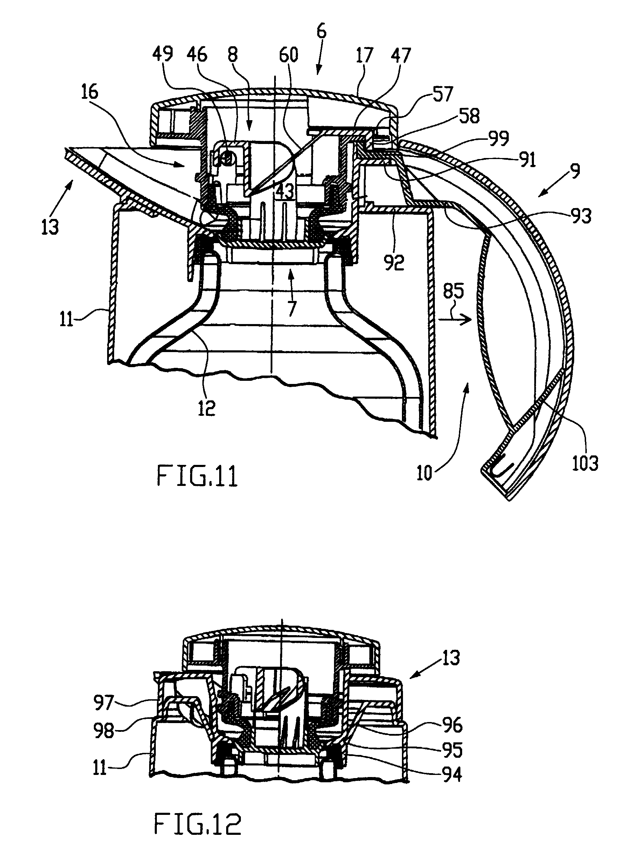

In den Figuren 11, 13 bis 15 sind analoge Schnitte entlang einer Linie XI-XI aus Figur 2 durch weitere Ausführungsbeispiele einer erfindungsgemäßen Kanne dargestellt. Figur 12 entspricht dabei einem Schnitt entlang der Linie XII-XII aus Figur 2 für das Ausführungsbeispiel nach Figur 11. Gleiche Teile sind mit gleichen Bezugszeichen versehen und werden nur noch teilweise erwähnt.

In Figur 11 ist in dem Kannenkörper 11 ein evakuierter Glaskolben 12 angeordnet. Am oberen Ende des Kannenkörpers 11 weist dieser einen zumindest teilweise umlaufenden Gleitabsatz 92 mit einer Gleitfläche an der Oberseite auf, auf der ein entsprechender Gleitvorsprung 93 des Auslösers 10 verschiebbar aufliegt. Das Aufsetzteil 13 ist bei dem zweiten Ausführungsbeispiel nach Figur 11 mit dem Kannenkörper 11 verrastet, siehe auch Figur 12. Oberhalb des Gleitabsatzes 92 weist das Aufsetzteil 13 beabstandet und im wesentlichen parallel zu diesem ebenfalls eine radial nach außen abstehende Gleitfläche als Oberseite eines Gleitrandes 91 auf. Auf diesem ist ein Gleitschenkel 99 des Auslösers 10 in radialer Richtung verschiebbar aufgelegt.

Zwischen Verschlußkappe 17 und Unterteil 16 ist der Führungsschlitz 57 gebildet, in dem das Verbindungsteil 47 des Verschlußverstellelements 8 in radialer Richtung nach außen verschiebbar gelagert ist. Das Verbindungsteil 47 ist ähnlich wie bereits anhand der Figuren 9 und 10 beschrieben, mittels des Bandes 60 mit dem Lagerteil 46 verbunden. Dieses ist an seinem dem Ausgießer zuweisenden Ende um Achsstummel 49 verschwenkbar gelagert.

In Figur 12 ist ein gegenüber dem Schnitt nach Figur 11 um 45° gedrehter Schnitt dargestellt. Insbesondere ist die Verrastung zwischen Aufsetzteil 13 und Kannenkörper 11 erkennbar. Das Aufsetzteil 13 weist einen einen Dichtungsring umrandenden Dichtungsrand 94 auf, der konzentrisch zur oberen Öffnung des Isolierkolbens 12 verläuft. Am oberen Ende des Dichtungsrandes 94 ist auf einer Außenseite des Aufsetzteils 13 eine Rastnut 95 gebildet, in die ein schräg nach innen und unten geneigter Rastflansch 96 des Kannenkörpers 11 rastend eingreift. Der Rastflansch 96 erstreckt sich von einem im wesentlichen horizontal umlaufenden oberen Rand des Kannenkörpers 11. An diesen schließt sich nach außen ein in eine Wandung des Kannenkörpers 11 übergehender Aufstellabsatz 98 an, auf dem eine im wesentlichen vertikale Umfangswand 97 des Aufsetzteils 13 von oben aufsteht.

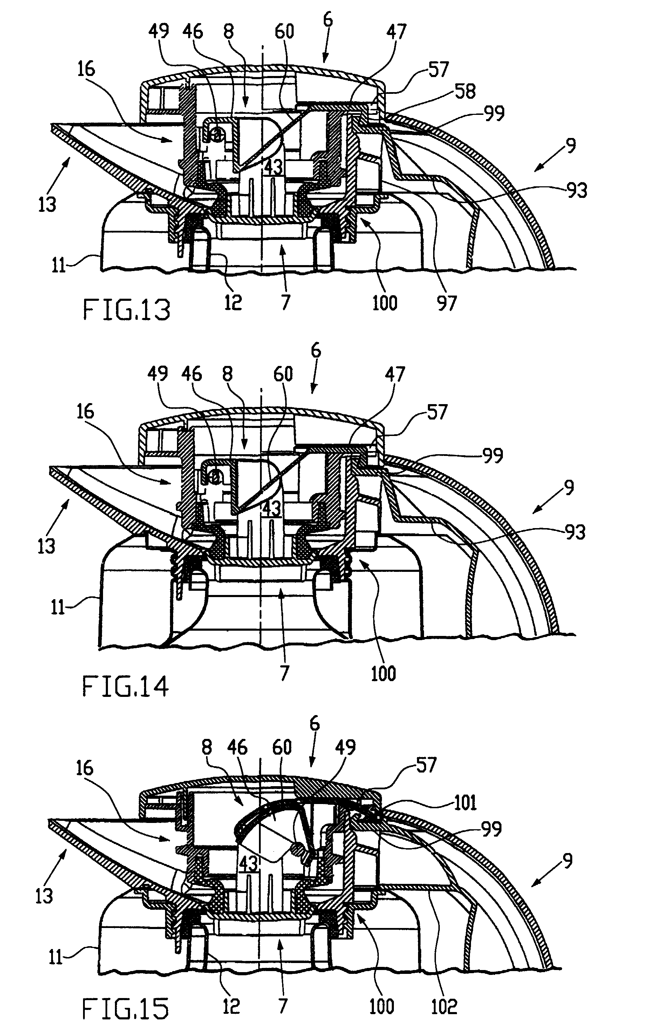

Im folgenden werden die weiteren Ausführungsbeispiele nach Figuren 13 bis 15 insbesondere im Unterschied zum Ausführungsbeispiel nach Figur 11 näher erläutert.

In Figur 13 ist das Aufsetzteil 13 mit einem metallenen Kannenkörper 11 über einen in diesen eingesetzten Schraubeinsatz 100 lösbar verbunden. Ansonsten entspricht der Aufbau von Aufsetzteil 13 und Deckel 6 im wesentlichen den vorangehenden Ausführungsbeispielen, wobei entsprechende Gleitflächen am Kannenkörper beziehungsweise Aufsetzteil fehlen, siehe Figur 11.

In Figur 14 ist der Kannenkörper 11 als doppelwandiger, teilevakuierter Metallkörper ausgebildet, wobei ein Schraubeinsatz 11 im Gegensatz zu Figur 13 einteilig mit dem Kannenkörper ausgebildet ist. Dieser Schraubeinsatz war in Figur 13 ein separates eingesetztes Teil.

Die übrigen Teile sind analog zu den bisherigen Ausführungsbeispielen und insbesondere nach Figur 13 aufgebaut.

In Figur 15 ist ein Kannenkörper 11 aus Metall mit Schraubeinsatz 100 und Isolierkolben 12 nach Figur 13 dargestellt. Im Unterschied zu dem Ausführungsbeispiel nach Figur 13 ist das Verschlußverstellelement 8 anders aufgebaut und Deckel 6 und Aufsetzteil 13 sind entsprechend angepaßt. Das Verschlußverstellelement 8 nach Figur 15 umfaßt nur Lagerteil 46 und Band 60. Das Lagerteil 46 ist im Gegensatz zu den bisherigen Ausführungsbeispielen an seinem dem Traggriff 9 zuweisenden Ende verschwenkbar gelagert. Entsprechende Achsstummel stehen auf der Innenseite des Unterteils 16 ab, auf die das Lagerteil 46 mit entsprechenden Öffnungen aufrastbar ist. An dem dem Lagerende gegenüberliegenden Ende des Lagerteils 46 ist das Band 60 befestigt, wobei dazwischen analog zu den bisherigen Ausführungsbeispielen das Verschlußelement 7 mit dem Lagerteil 46 bewegungsverbunden ist.

Das Band 60 erstreckt sich oberhalb des Lagerteils 46 durch den Führungsschlitz 47 und ist an seinem freien Ende hakenförmig, das heißt mit einem Hakenende 101 ausgebildet. Dieses Hakenende 101 hintergreift wie bei den bisherigen Ausführungsbeispielen das Eingriffsende 55 des Auslösers 10.

Weiterhin steht vom Auslöser 10 ein Anschlagflansch 102 radial nach innen und im wesentlichen horizontal ab. Dieser ist mit einem am oberen Ende des Kannenkörpers 11 umlaufenden Rand beziehungsweise einer Wandung des Aufsetzteils 13 in Anlage.

Es sei angemerkt, daß auch bei den anderen Ausführungsbeispielen nach Figuren 11, 13 und 14 ein Verschlußverstellelement 8 nach Figur 15 einsetzbar ist.

Weiterhin sei angemerkt, daß der Auslöser 10, siehe insbesondere Figur 11, einen vom Kannenkörper 11 wegweisenden Rückstellschenkel 103 aufweisen kann, der als Federelement zum Rückstellen des Auslösers 10 entgegengesetzt zur Betätigungsrichtung 85 wirkt.

## Patentansprüche

1. Kanne (1), insbesondere Thermokanne, mit einem eine obere Aufnahmeöffnung (2) aufweisenden Innenraum (3), einem mit dieser über einen Leitkanal (4) verbundenen Ausgießer (5), einem auf die Kanne (1) aufsetzbaren Deckel (6), einem Verschlußelement (7) zum flüssigkeitsdichten Verschluß von Aufnahmeöffnung (2) und/oder Leitkanal (4) sowie einem mit dem Verschlußelement (7) bewegungsverbundenen Verschlußverstellelement (8) und einem im wesentlichen seitlich von der Kanne (1) abstehenden Traggriff (9) mit einem Auslöser (10) für das Verschlußverstellelement (8), **dadurch gekennzeichnet**, daß das Verschlußelement (7) und das Verschlußverstellelement (8) im Deckel angeordnet sind und bei auf der Kanne (1) aufgesetztem Deckel (6) das Verschlußverstellelement (8) mit dem Auslöser (10) bewegungsverbunden ist.

2. Kanne nach Anspruch 1, **dadurch gekennzeichnet**, daß der Innenraum (3) von einem in einen Kannenkörper (11) eingesetzten Isolierkolben (12) gebildet ist, der an seinem oberen Ende die Aufnahmeöffnung (2) aufweist.

3. Kanne nach Anspruch 1 oder 2, **dadurch gekennzeichnet**, daß ein den Ausgießer (5) aufweisendes Aufsetzteil (13) auf einer Kannenoberseite lösbar befestigt ist und in Befestigungsstellung mit einem die Aufnahmeöffnung (2) umgebenden Randbereich in Dichtanlage ist.

4. Kanne nach wenigstens einem der vorangehenden Ansprüche, **dadurch gekennzeichnet**, daß zwischen Aufsetzteil (13) und Randbereich eine Dichtung angeordnet ist.

5. Kanne nach wenigstens einem der vorangehenden Ansprüche, **dadurch gekennzeichnet**, daß der Traggriff (9) einteilig mit dem Aufsetzteil (13) ausgebildet ist.

6. Kanne nach wenigstens einem der vorangehenden Ansprüche, **dadurch gekennzeichnet**, daß der Leitkanal (4) durch das Aufsetzteil (3) hindurch den seitlich von diesem abstehenden Ausgießer (5) mit der Aufnahmeöffnung (2) verbindet, wobei der Leitkanal insbesondere einen im wesentlichen kreisförmigen Querschnitt aufweist und vertikal verläuft.

7. Kanne nach wenigstens einem der vorangehenden Ansprüche, **dadurch gekennzeichnet**, daß ein oberes Kanalende (14) des Leitkanals (4) zumindest teilweise von einem Aufschraubring (15) umgeben ist, auf den der Deckel (6) insbesondere aufschraubbar ist.

8. Kanne nach wenigstens einem der vorangehenden Ansprüche, **dadurch gekennzeichnet**, daß der Deckel (6) ein im wesentlichen ringförmiges Unterteil (16) zur Lagerung von Verschlußelement (7) und Verschlußverstellelement (8) und eine auf das Unterteil aufgesetzte Verschlußkappe (17) aufweist.

9. Kanne nach wenigstens einem der vorangehenden Ansprüche, **dadurch gekennzeichnet**, daß das Unterteil (16) einen mit einem Außengewinde (18) versehenen Schraubring (19) zum Einschrauben in den Aufschraubring (15) und einen radial am oberen Ende (20) des Schraubrings (19) nach außen vorstehenden Auflagering (21) aufweist.

10. Kanne nach wenigstens einem der vorangehenden Ansprüche, **dadurch gekennzeichnet**, daß der Schraubring (19) mit einer zu seiner Unterseite (22) offenen Radialnut (23) ausgebildet ist, in welcher ein oberer Randflansch (24) eines federelastischen Balgelementes (25) einsetzbar ist, dessen dem Leitkanal (4) bzw. der Aufnahmeöffnung (2) zuweisendes unteres Ende (26) sich auf dem im Deckel (6) verstellbar gelagerten Verschlußelement (7) abstützt.

11. Kanne nach wenigstens einem der vorangehenden Ansprüche, **dadurch gekennzeichnet**, daß das Balgelement (25) zumindest einen unteren Hohlabschnitt (27) und einen oberen Hohlabschnitt (28) aufweist, wobei der Innendurchmesser (29) des unteren Hohlabschnitts (27) geringer als ein Innendurchmesser (30) des oberen Hohlabschnitts (28) ist und wobei der obere Hohlabschnitt (28) durch den oberen Randflansch (24) gebildet ist.

12. Kanne nach wenigstens einem der vorangehenden Ansprüche, **dadurch gekennzeichnet**, daß vom unteren Ende (31) des oberen Randflansches (24) ein radial nach außen abstehender Anlagerand (32) absteht, welcher an ein unteres Ende (33) der Ringnut (23) anlegbar ist.

13. Kanne nach wenigstens einem der vorangehenden Ansprüche, **dadurch gekennzeichnet,** daß der Schraubring (19) einen über die Ringnut (23) nach unten in Richtung Aufschraubring (15) vorstehenden und radial zur Ringnut (23) nach außen versetzten Fußrand (34) aufweist, an dem von innen der Anlagerand (32) anliegt.

14. Kanne nach wenigstens einem der vorangehenden Ansprüche, **dadurch gekennzeichnet,** daß das Verschlußelement (7) eine tellerförmige Dichtplatte (35) aufweist, von deren Unterseite (36) ein in den Leitkanal (4) bzw. in die Aufnahmeöffnung (2) einsetzbarer Einsteckring (37) absteht.

15. Kanne nach wenigstens einem der vorangehenden Ansprüche, **dadurch gekennzeichnet**, daß der Einsteckring (37) zumindest eine dem Ausgießer (5) zuweisende Radialöffnung (38) aufweist.

16. Kanne nach wenigstens einem der vorangehenden Ansprüche, **dadurch gekennzeichnet**, daß die Dichtplatte (35) einen im wesentlichen nach außen und nach oben in Richtung Balgelement (25) geneigten Plattenrand (39) aufweist, wobei an dessen Innenseite (40) und an einer Plattenoberseite (41) ein wulstförmiges unteres Ende (44) des unteren Hohlabschnitts (27) anliegt.

17. Kanne nach wenigstens einem der vorangehenden Ansprüche, **dadurch gekennzeichnet**, daß von der Plattenoberseite (41) zumindest zwei Lagerarme (43) abstehen, welche am Verschlußverstellelement (8) gelagert sind.

18. Kanne nach wenigstens einem der vorangehenden Ansprüche, **dadurch gekennzeichnet**, daß das Verschlußverstellelement (8) im wesentlichen an einem Ende (44) im Deckel (6) verschwenkbar gelagert ist und mit seinem anderen Ende (45) in Aufsetzstellung des Deckels mit dem Auslöser (10) bewegungsverbunden ist.

19. Kanne nach wenigstens einem der vorangehenden Ansprüche, **dadurch gekennzeichnet**, daß das Verschlußverstellelement (8) wenigstens zweiteilig aus Lagerteil (46) und Verbindungsteil (47) aufgebaut ist, wobei das Lagerteil (46) im Deckel (6) an seinem Lagerende (44) verschwenkbar gelagert ist und an seinem Tragende (48) die Lagerarme (43) verschwenkbar gelagert sind.

20. Kanne nach wenigstens einem der vorangehenden Ansprüche, **dadurch gekennzeichnet**, daß zwei Achsstummel (49) vom Lagerende (44) abstehen, die von im Deckel (6) angeordneten Lagerlaschen (50) insbesondere lösbar aufgenommen sind.

21. Kanne nach wenigstens einem der vorangehenden Ansprüche, **dadurch gekennzeichnet**, daß die Lagerlaschen (50) als Rastlaschen mit radial nach außen geöffneten Rastöffnungen (51) ausgebildet sind

22. Kanne nach wenigstens einem der vorangehenden Ansprüche, **dadurch gekennzeichnet**, daß zwei Achsstummel (52) am Tragende (48) seitlich abstehen, die in Lageröffnung (53) im wesentlichen an oberen Enden (44) der Lagerarme (43) einsetzbar sind.

23. Kanne nach wenigstens einem der vorangehenden Ansprüche, **dadurch gekennzeichnet**, daß das Verbindungsteil (47) mit dem Lagerteil (46) zum Verschwenken bewegungsverbunden ist und in Aufsetzstellung des Deckels (6) mit einem in Richtung Deckel aus dem Traggriff (9) vorstehenden Eingriffsende (55) des Auslösers (10) in Eingriff ist.

24. Kanne nach wenigstens einem der vorangehenden Ansprüche, **dadurch gekennzeichnet**, daß das Verbindungsteil (47) in etwa L-förmig ist, wobei ein längerer L-Schenkel (56) in einem Führungsschlitz (57) im Auflagering (21) in im wesentlichen radialer Richtung verschieblich gelagert ist und ein kürzerer L-Schenkel (58) aus dem Führungsschlitz (57) nach unten vorsteht und einen nach oben in Richtung Deckel (6) gerichteten Anschlag (59) am Eingriffsende (55) hintergreift.

25. Kanne nach wenigstens einem der vorangehenden Ansprüche, **dadurch gekennzeichnet**, daß Verbindungsteil (47) und Lagerteil (46) mittels eines elastischen Bandes (60) bewegungsverbunden sind.

26. Kanne nach wenigstens einem der vorangehenden Ansprüche, wobei der Traggriff in Richtung Kanne (1) konkav gekrümmt verläuft, **dadurch gekennzeichnet**, daß der Auslöser (10) im wesentlichen aus einem in einem Hohlraum (65) des Traggriffs (9) angeordneten Federband (66) gebildet ist, von dem ein Triggerelement (67) aus dem Traggriff (9) in Richtung Kanne (1) vorsteht.

27. Kanne nach wenigstens einem der vorangehenden Ansprüche, **dadurch gekennzeichnet**, daß das Federband (66) an seinem dem Eingriffsende (55) gegenüberliegenden Lagerende (68) am unteren Ende (69) des Traggriffs (9) verschwenkbar gelagert ist.

28. Kanne nach wenigstens einem der vorangehenden Ansprüche, **dadurch gekennzeichnet**, daß der Anschlag (59) des Eingriffsendes (55) in Ausgangsstellung des Federbandes (66) in einer Umfangsvertiefung (70) des Aufschraubringes (15) im wesentlichen versenkt angeordnet ist.

29. Kanne nach wenigstens einem der vorangehenden Ansprüche, **dadurch gekennzeichnet**, daß vom Deckelunterteil (16) ein Anschlagelement (90) absteht, das zur Festlegung einer Aufsetzstellung des Deckels (6) mit einem Gegenanschlagelement im Aufsetzteil (13) in Anlage bringbar ist.

30. Kanne nach Anspruch 31, **dadurch gekennzeichnet**, daß das Anschlagelement (90) vom Außengewinde (18) im wesentlichen senkrecht in Richtung Verschlußkappe (17) absteht und das Gegenanschlagelement ein in Aufschraubrichtung des Deckels (6) weisendes Ende eines auf einer Innenwand (77) des Aufschraubringes (15) ausgebildeten Innengewindes ist.

31. Kanne nach wenigstens einem der vorangehenden Ansprüche, **dadurch gekennzeichnet**, daß das Anschlagelement (90) in Aufsetzstellung des Deckels (6) reibschlüssig gehalten ist.

32. Kanne nach wenigstens einem der vorangehenden Ansprüche, **dadurch gekennzeichnet**, daß das Aufsetzteil (13) auf den Kannenkörper (11) aufschraubbar und/oder aufrastbar ist.

33. Kanne nach wenigstens einem der vorangehenden Ansprüche, **dadurch gekennzeichnet**, daß der Führungsschlitz (57) zwischen Verschlußkappe (17) und Unterteil (16) ausgebildet ist.

34. Kanne nach wenigstens einem der vorangehenden Ansprüche, **dadurch gekennzeichnet**, daß das Aufsetzteil (13) wenigstens eine im wesentlichen radial nach außen vorstehende Gleitfläche (91, 92) aufweist, auf der ein entsprechendes Gleitteil (93, 99) des Auslösers (10) aufliegt.

35. Kanne nach wenigstens einem der vorangehenden Ansprüche, **dadurch gekennzeichnet**, daß ein Schraubeinsatz (100) innerhalb des Kannenkörpers (11) angeordnet ist, mit dem das Aufsetzteil (13) verschraubbar ist.

36. Kanne nach wenigstens einem der vorangehenden Ansprüche, **dadurch gekennzeichnet**, daß das Verschlußverstellelement (8) innerhalb des Unterteils (16) auf Seiten des Traggriffes (9) verschwenkbar gelagert ist.

37. Kanne nach wenigstens einem der vorangehenden Ansprüche, **dadurch gekennzeichnet**, daß das Verschlußverstellelement (8) aus dem Lagerteil (46) und dem Band (60) gebildet ist, welches am dem Traggriff (9) gegenüberliegenden Ende des Lagerteils (46) befestigt ist.

38. Kanne nach wenigstens einem der vorangehenden Ansprüche, **dadurch gekennzeichnet**, daß das Band (60) an seinem freien Ende zum Hintergreifen des Eingriffendes (55) hakenförmig ausgebildet ist.
